(19) Europäisches Patentamt
European Patent Office
Office européen des brevets

(11) **EP 2 014 625 A1**

(12) **EUROPÄISCHE PATENTANMELDUNG**

(43) Veröffentlichungstag:
**14.01.2009 Patentblatt 2009/03**

(51) Int Cl.:
*C04B 16/08* (2006.01)     *C04B 28/02* (2006.01)

(21) Anmeldenummer: **07111642.0**

(22) Anmeldetag: **03.07.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Sika Technology AG**
**6340 Baar (CH)**

(72) Erfinder: **Jernei, Michael**
**6700 Bludenz (AT)**

(74) Vertreter: **Sika Patent Attorneys**
**c/o Sika Technology AG**
**Geschäftsstelle Zürich**
**Tüffenwies 16**
**Postfach**
**8048 Zürich (CH)**

(54) **Wärme- und Trittschalldämmstoff mit geringem Gehalt an hydraulischen Bindemittel und hohem Anteil an geschäumten Polystyrol**

(57)     Die vorliegende Erfindung betrifft einerseits Dämmstoff-Trockenzusammensetzung zur Herstellung einer Trittschall- und Wärmedämmung. Diese Dämmstoff-Trockenzusammensetzungen weisen einen geringen Anteil von hydraulischem Bindemittel, einen Dispersionskunststoff sowie einen hohen Anteil an Polystyrol in Form von geschäumten Polystyrolperlen und geschäumten Polystyrolgranulat auf.

Die Dämmstoff-Trockenzusammensetzung bzw. die mit Wasser angemachte Dämmstoffzusammensetzung eigenen sich ausserordentlich gut zur Erstellung von Trittschall- und Wärmedämmungen, insbesondere für Böden. Sie zeichnen sich durch äusserst hohe Wärme- und Trittschalleigenschaften sowie eine schnelle Begehbarkeit, bzw. kurze Belegereifen, aus.

Figur 1

EP 2 014 625 A1

**Beschreibung**

**Technisches Gebiet**

Die Erfindung betrifft Dämmstoffzusammensetzungen und Dämmstoffe für Wärme- und Trittschalldämmung, welche auf Basis von geschäumten Polystyrol und hydraulischen Bindemitteln formuliert werden.

**Stand der Technik**

Wärme- und Trittschalldämmungen sind im modernen Gebäudebau sehr wichtig. Es ist bekannt, dass Schaumstoffe gute Dämmeigenschaften aufweisen. Weit verbreitet sind Schaumstoffe auf Basis von Polystyrol oder Polyurethan, insbesondere als Platten, sowie Steinwoll- oder Mineralwolleplatten. Üblicherweise werden diese Platten anschliessend mit einer Deckschicht, zum Beispiel erdfeucht verarbeitetem Unterlagsmörtel, beziehungsweise Beton, ("Estrich" genannt) oder Fliessestrichen oder Plattenkonstruktionen (Holz, etc.), als Tragschicht überdeckt. Der Unterbau unter diesen Tragschichten besteht daher hauptsächlich im Moment aus zwei separat zu verarbeitenden Teilen. Zuerst wird eine Schüttung beispielsweise aus Splitt (gebunden oder ungebunden) als Niveauausgleich eingebracht, dann werden Platten sehr aufwendig durch Zuschneiden verlegt. Um dies zu umgehen, wurden deshalb Anstrengungen gemacht, fugenlose Dämmstoffe auf Zementbasis und Schaumstoffen zu entwickeln, die durch Wasser gehärtet werden. Da hierfür jedoch die Schaumstoffe durch die Zementmatrix verfestigt werden müssen, weist ein solcher Dämmstoff, welcher lediglich auf einem Zementbindemittel aufgebaut ist, einen sehr hohen Zementgehalt und dadurch bedingt, neben einem hohen spezifischen Gewicht, eine sehr schlechte Wärme- und Trittschalldämmung auf. Üblicherweise sind hier Mindestbindemittelgehalte von 120 kg Zement pro m$^3$ notwendig, um ausreichende Tragkraft zu erreichen. Es wurde deshalb versucht den Zementgehalt zu reduzieren. So wurde in DE 3345550 A1 gefunden, dass der Zusatz von hydrolysierter Kieselsäure eine solche Reduktion des Zementes in einem Polystyrol enthaltenden Wärmedämmputz für die Aussenseite von Gebäuden und somit eine Verminderung der Festmörtelrohdichte um 25 % erlaubt. Derartige Zusammensetzungen weisen jedoch aufgrund ihres hohen Zementanteils und der Mechanik des abgebundenen Dämmstoffes eine schlechte Trittschalldämmung auf und eignen sich deshalb nicht für einen Bodenaufbau. EP 0 819 662 A1 beschreibt einen Dämmstoff zur Wärme- und Trittschalldämmung eines Bodens, der neben einem Schaumstoffgranulat und einem zementösen Bindemittel einen Anteil von amorpher Kieselsäure von wenigstens 10 Gew.-%, bezogen auf den Zement, aufweist. Die Wirkungsweise wird hierbei durch die puzzolane Wirkung der eingesetzten Kieselsäure erklärt.

Diese mineralischen Bindemittel des Standes der Technik ermöglichen realistischerweise eine Reduktion des Bindemittelgehalts auf lediglich 60 kg und mehr pro m$^3$ Styroporgranulatschüttung. Diese Schüttungen -ausreichend tragfähig ausgeführt- sind relativ starr und weisen nach dem Erhärten eine dynamische Steifigkeit vor Begehung zwischen 40 und 60 MN/m$^3$ auf und zeigen daher nur eine mittlere Trittschallminderung. Im Gegensatz zu den hoch zementhaltigen Schüttungen (100 kg und mehr) brechen jedoch beim direkten Begehen vor der Applikation des Zementestrichs die zementösen Bindungen zwischen den Granulatkörnern teilweise und die Schüttung setzt sich und erweicht.

Für die Bestimmung der Dämmeigenschaften werden einerseits die Wärmeleitfähigkeit [W/mK] und andererseits die Trittschallminderung [dB], beziehungsweise, damit verbunden, die dynamische Steifigkeit [MN/m$^3$] ermittelt.

Gebundene Granulatschüttungen gemäss dem Stand der Technik weisen typischerweise Wärmeleitfähigkeiten von grösser 0.044 W/mK und dynamischen Steifigkeiten von ca. 20 MN/m$^3$ nach Belastung auf.

Wünschenswert sind daher Systeme, die mit deutlich verbesserter Bindekraft und verbessertem Rückstellverhalten gleichwertige oder bessere Wärme- und Trittschalleigenschaften aufweisen, und damit in der Anwendung deutlich sicherer sind.

DE 28 36 855 A1 offenbart eine Wärmeschicht auf Basis organischer geschlossenzelliger wasserdichter Schaumstoffteilchen mit Tonerdeschmelzzement, einer Dispersion eines Copolymerisats sowie feinteilige quellend wirkende Trocknungshilfsmittel, wasserlösliche Thixotropierungsmittel und soforthaftungs- und Luftporenstabilisierungsmittel.

DE 200 17 460 U1 offenbart ein Trockenmischgut aus PolystyrolGranulat (Polystyrol-Recyclat) und einem hydraulischen Bindemittel, wobei das Bindemittel auf dem Granulat aufgemahlen wird, um zu verhindern, dass bei der Lagerung ein Entmischen von Polystyrol und Bindemittel erfolgt. Die hier offenbarten Trockenmischungen weisen jedoch sehr hohe Dichten auf, was auf den hohen Anteil an Zement, bzw. auf den geringen Anteil an PolystyrolGranulat, zurückzuführen ist. Derartige Zusammensetzungen weisen verbesserungswürdige Wärme- und Trittschalleigenschaften auf.

DE 29 30 615 A1 offenbart eine Mischung für einen schnell aushärtenden Estrich mit geschlossenzelligen Schaumstoffteilchen, einem hydraulischen Bindemittel, Streckmittel, Verlaufmittel, Wasserrückhaltemittel und einem Gleitmittel. Diese Mischungen weisen jedoch einen sehr geringen Anteil an geschäumten Polystyrol auf, so dass derartige Zusammensetzungen stark verbesserungswürdige Wärme- und Trittschalleigenschaften aufweisen.

WO 2005/021459 A2 offenbart eine Dämmstoffzusammensetzung mit Schaumstoffgranulat und einem zementösen Bindemittel, ein Wasserrückhaltemittel in einer Menge zwischen 0.1 und 25 Gew.-%, bezogen auf den Zement, und einem Verhältnis von Schaumstoffgranulat zu Zement von 20 Gew.-% und 120 Gew.-%.

WO 2005/021460 A2 offenbart eine Dämmstoffzusammensetzung mit Schaumstoffgranulat und einem zementösen Bindemittel, ein Wasserrückhaltemittel, einen Dispersionskunststoff in einer Menge von 2 bis 15 Gew.-% Trockenmasse bezogen auf den Zement sowie Zement in einer Menge unter 100 kg/m³ der mit Wasser angemachten Dämmstoffzusammensetzung.

Es hat sich jedoch gezeigt, dass diese Systeme trotz der Verbesserungen in Bezug auf Festigkeits-/Bindemittelverhältnis und Reduktion der Trocknungszeit noch weiter verbesserungsfähig sind.

## Darstellung der Erfindung

Aufgabe der vorliegenden Erfindung war es Dämmstoffe auf Basis eines hydraulischen Bindemittels zu entwickeln, die einen möglichst hohen Anteil an geschäumten Polystyrol aufweisen, und nach Aushärtung mit Wasser eine grosse Eigenfestigkeit sowie exzellente Wärme- und Trittschalldämmung, insbesondere auch nach erfolgter mechanischer Belastung, aufweisen, sich gut verarbeiten lassen und schnell begehbar, bzw. belegereif, sind.

Überraschenderweise wurde gefunden, dass diese Aufgabe durch eine Dämmstoff-Trockenzusammensetzung gemäss Anspruch 1, beziehungsweise durch eine Dämmstoffzusammensetzung gemäss Anspruch 22 gelöst werden kann. Dies ermöglicht einen Einsatz an hydraulischem Bindemittel von weniger als 80 Gewichts-%, und an geschäumten Polystyrol von mehr als 8 Gewichts-%, bezogen auf die Dämmstoff-Trockenzusammensetzung einzusetzen, und trotzdem exzellente mechanische Festigkeit als auch exzellente Dämmeigenschaften zu erhalten. Ein wesentlicher Vorteil dieser Zusammensetzungen ist eine gute Verarbeitbarkeit gekoppelt mit einer schnellen Begehbarkeit und Belegereife, sowie exzellenten Festigkeiten bei weiter reduzierter Rohdichte und damit verbesserter Wärmeleitfähigkeit.

Weitere Aspekte der vorliegenden Erfindung bilden Verwendungen gemäss Anspruch 27 und 28 sowie ein Bodenaufbau gemäss Anspruch 29.

Bevorzugte Ausführungen der Erfindung sind Gegenstand der abhängigen Ansprüche.

## Kurze Beschreibung der Zeichnungen

Im Folgenden werden anhand der Zeichnungen Ausführungsbeispiele der Erfindung näher erläutert. Gleiche Elemente sind in den verschiedenen Figuren mit den gleichen Bezugszeichen versehen.

Fig. 1    einen Estrichbodenaufbau im Querschnitt im Wandbereich
Fig. 2    einen Estrichbodenaufbau im Querschnitt mit Leitungen
Fig. 3    die Messanordnung für die Bestimmung der dynamischen Steifigkeit
Fig. 4    die schematische Messanordnung gemäss Fig.3

## Weg zur Ausführung der Erfindung

Die vorliegende Erfindung betrifft in einem ersten Aspekt eine Dämmstoff-Trockenzusammensetzung zur Herstellung einer Trittschall- und Wärmedämmung. Diese Dämmstoff-Trockenzusammensetzung umfasst

a) ein hydraulisches Bindemittel in einer Menge von weniger als 80 Gewichts-%, bezogen auf die Dämmstoff-Trockenzusammensetzung
b) mindestens einen Dispersionskunststoff
c) mindestens Polystyrol in Form von geschäumten Polystyrolperlen
d) mindestens Polystyrol in Form von geschäumtem Polystyrolgranulat mit einer durch mechanische Belastung beschädigten Oberfläche.

Die Menge des Polystyrols (Summe von c) und d)) beträgt hierbei mehr als 8 Gewichts-%, bezogen auf die Dämmstoff-Trockenzusammensetzung.

Die Dämmstoff-Trockenzusammensetzung enthält ein hydraulisches Bindemittel (a). Für die Auslegung des Begriffes "hydraulisches Bindemittel" gilt in diesem vorliegenden Dokument eine erweiterte Definition:

neben den klassisch als hydraulische Bindemittel bezeichneten Substanzen, nämlich solche Substanzen, welche mit Wasser auch unter Wasser erhärtbar sind (,hydraulisches Bindemittel' in CD Römpp Chemie Lexikon- Version 1.0, Stuttgart/New York, Georg Thieme Verlag 1995), werden auch die latent-hydraulischen Bindemittel, nämlich welche unter dem Einwirken von Zusätzen mit Wasser abbinden (,latent hydraulisches Bindemittel' in CD Römpp Chemie Lexikon - Version 1.0, Stuttgart/New York, Georg Thieme Verlag 1995), sowie auch solche Substanzen, welche lediglich an Luft mit Wasser reagieren (‚nichthydraulisches Bindemittel' in CD Römpp Chemie Lexikon-Version 1.0, Stuttgart/New York, Georg Thieme Verlag 1995), als hydraulische Bindemittel bezeichnet.

Somit werden neben Zementen insbesondere auch Calciumsulfat, in Form von Anhydrit, Halbhydrat- oder Dihydratgips, oder Hochofenschlacke als hydraulisches Bindemittel bezeichnet.

Bevorzugt ist oder enthält das hydraulische Bindemittel mindestens einen Zement. Insbesondere ist der Zement ein Zement gemäss Euronorm EN 197. Bevorzugt als Zemente sind Portlandzemente, Sulfoaluminatzemente und Tonerdeschmelzzemente, insbesondere Portlandzement. Mischungen von Zementen können zu besonders guten Eigenschaften führen. Besonders geeignet sind Mischungen von mindestens einem Portlandzement mit mindestens einem Sulfoaluminatzement oder mindestens einem Tonerdeschmelzzement. Für eine schnelle Aushärtung kommen vor allem zementöse Schnellbindemittel zum Einsatz, die vorzugsweise mindestens einen Tonerdeschmelzzement oder eine andere Aluminatquelle, wie beispielsweise aluminatspendende Klinker, und gegebenenfalls Calciumsulfat, in Form von Anhydrit, Halbhydrat- oder Dihydratgips; und/oder Calciumhydroxid enthalten.

Der Anteil des hydraulischen Bindemittels, insbesondere des Zementes, beträgt vorzugsweise 40 - 80 Gewichts-%, insbesondere von 50 - 80 Gewichts-%, bevorzugt von 50 - 75 Gewichts-%, bezogen auf die Dämmstoff-Trockenzusammensetzung, beträgt. Der Anteil des hydraulischen Bindemittels, insbesondere des Zements, ist insbesondere mit 100 kg/m$^3$, vorzugsweise mit 80 kg/m$^3$, der mit Wasser angemachten Dämmstoff-Trockenzusammensetzung nach oben begrenzt.

Die Dämmstoff-Trockenzusammensetzung enthält mindestens einen Dispersionskunststoff (b).

Unter einem Dispersionskunststoff wird in der gesamten vorliegenden Schrift ein organisches Copolymer verstanden, welches in einer wässrigen Dispersion oder als redispergierbares Pulver, beispielsweise erhalten durch eine Sprühtrockung einer Dispersion, vorliegt Solche Pulver sind dem Fachmann auch als Kunststoffdispersionspulver bekannt. Dieses Copolymer ist insbesondere ein Copolymer von mindestens zwei, bevorzugt von zwei, unterschiedlichen ethylenisch ungesättigten Monomeren, von welchen mindestens ein Co-Monomer, bevorzugt alle Co-Monomere, ausgewählt sind aus der Gruppe umfassend Ethylen, Butadien, Methacrylsäure, Acrylsäure, Methacrylsäureestern, Acrylsäureestern, Styrol, Vinylacetat und Acrylonitril.

Im Allgemeinen als geeignet gezeigt haben sich die Copolymere Acrylsäure/Styrol, Methacrylsäure/Styrol, Styrol/Butadien und Vinylacetat/Ethylen. Unter gewissen Umständen ist es jedoch vorteilhaft Vinylacetat-freie Polymere zu verwenden.

Besonders bevorzugt sind Acrylsäure/Styrol- und Methacrylsäure/Styrol-Copolymere.

Diese Copolymere werden nach den üblichen dem Fachmann bekannten Polymerisationsverfahren hergestellt.

Der Dispersionskunststoff weist typischerweise ein Molekulargewicht im Bereich zwischen 30'000 und 10'000'000 g/mol, insbesondere zwischen 100'000 und 5'000'000 g/mol, auf. Besonders bevorzugt sind Molekulargewichte zwischen 200'000 und 2'000'000 g/mol.

Die Partikel des Dispersionskunststoff sind in einer feinteiligen wässrigen Kunststoffdispersion vorteilhaft zwischen 0.04 bis 0.5 $\mu$m, insbesondere zwischen 0.1 bis 0.2 $\mu$m, oder in einer grobdispersen wässrigen Dispersion vorteilhaft zwischen 2 bis 5 $\mu$m, und als Kunstoffdispersionspulver 0.5 bis 10 $\mu$m nach Redispergierung.

Überraschenderweise hat sich weiterhin gezeigt, dass bei gleichbleibender Elastizität der Dämmung höhere Bindefestigkeiten mit Dispersionskunststoffen, die einen geringen elastischen Charakter, also einer hohen Glasumwandlungstemperatur, aufweisen, erreicht werden.

Der Dispersionskunststoff wird vorzugsweise in einer Menge von 0.5 bis 25, insbesondere von 0.5 bis 15, bevorzugt von 2 bis 12 Gewichts-%, Trockenmasse, bezogen auf das hydraulische Bindemittel eingesetzt.

Die Wirkungsweise des Dispersionskunststoffs wird im Wesentlichen dadurch erklärt, dass die Dispersionskunststoffteilchen die Haftfestigkeit des starren, abgebundenen hydraulischen Bindemittels an den elastischen geschäumten Polystyrol-Teilchen wesentlich verbessert. So hat eine Mikroskopanalyse gezeigt, dass die circa nur 20 - 30 $\mu$m dicke Bindemittelschicht auf den Granulatkugeln selbst bei Stauchung der elastischen Kugeln auf einen Bruchteil der ursprünglichen Dicke sich nicht ablöst.

Die volle Entfaltung der Elastifizierungswirkung des Dispersionskunststoffes auf die Dämmstoff-Trockenzusammensetzung entfaltet sich vor allem im Zusammenspiel mit einem Wasserrückhaltemittel, welches als ein möglich vorhandener weiterer Bestandteil der Zusammensetzung erwähnt ist. Es ist äusserst überraschend, dass bereits eine relativ geringe Zugabe eines Dispersionskunststoffs den gewünschten Effekt in der Zusammensetzung ergibt.

Die Dämmstoff-Trockenzusammensetzung enthält mindestens Polystyrol in Form von geschäumten Polystyrolperlen (c). Geschäumte Polystyrolperlen in bekannter Art und Weise aus expandierbarem Polystyrol, d.h. Polystyrol, welche ein Treibmittel enthalten, durch Wärmebehandlung, insbesondere durch heissen Wasserdampf, geschäumt. Dieser Prozess ist an und für sich bekannt und wird seit langem für die Herstellung von expandierten Polystyrol-Hartschäumen (EPS), insbesondere bei der Herstellung von EPS-Hartschaumplatten, wie sie vor allem zur Isolation eingesetzt werden, verwendet. Der Schäumungsgrad und damit die Rohschüttdichte der geschäumten Polystyrolperlen kann durch die Prozessparameter bei der Schäumung bei Bedarf variiert werden. Die Perlen weisen beinahe perfekte Kugelgestalt auf und sind aus geschlossenen Schaumzellen aufgebaut. Die Oberflächen sind abgesehen von kleinen offenen Poren, die nadelstichartig auf der gesamten Kugeloberfläche verteilt sind, intakt. Insbesondere weisen sie keine Schädigungen auf, wie sie durch mechanische Beanspruchungen entstehen. Als besonders bevorzugte Ausführungsart von geschäumten Polystyrolperlen gilt Neu-Styropor, d.h. Styropor, welches lediglich aufgeschäumt wurde und nicht weiter verarbeitet wurde.

Die Dämmstoff-Trockenzusammensetzung enthält mindestens Polystyrol in Form von geschäumtem Polystyrolgranulat mit einer durch mechanische Belastung beschädigten Oberfläche (d). Im Gegensatz zu den oben erwähnten geschäumten Polystyrolperlen sind diese geschäumten Polystyrolgranulate nicht kugelig, sondern weisen typischerweise eine polyedrische Gestalt auf. Es gibt zwei Ausführungsformen, welche zu derartigen geschäumten Polystyrolgranulaten führt.

Einerseits können geschäumte Polystyrolgranulate aus geschäumten Polystyrolplatten und/oder -Formteile, insbesondere aus Polystyrol-Verpackungen, durch mechanische Zerkleinerung, wie Mahlen, erhalten werden. Bei einer derartigen Zerkleinerung werden die miteinander verschmolzenen Schaumpartikel auseinander gerissen, so dass die Oberfläche Risse, Taschen und Abrisskanten aufweist. Diese Art lässt sich insbesondere aus geschäumten Polystyrolen, welche als Abfall gesammelt werden, gewinnen und wird auch als Recycling-Polystyrol bezeichnet.

Andererseits ist es möglich geschäumtes Polystyrolgranulat mit einer durch mechanische Belastung beschädigten Oberfläche (d) durch mechanische Bearbeitung, insbesondere durch ein Walken oder Aufrauen, direkt aus geschäumten einzelnen Polystyrolperlen (c), wie sie vorgängig beschrieben sind, zu erhalten. Bei einer derartigen mechanischen Bearbeitung entstehen Risse und/oder Schrunden in der Oberfläche.

Je nach Schäumgrad, bzw. Dichte, des verwendeten Ausgangsmaterials und Art der mechanischen Bearbeitung bzw. deren Prozessparameter können unterschiedliche Schüttdichten erreicht werden.

Sowohl das geschäumte Polystyrolgranulat mit einer durch mechanische Belastung beschädigten Oberfläche (d) als auch die geschäumten Polystyrolperlen (c) können bei Bedarf gesiebt werden und so bestimmte Korngrössenverteilungen erzielt werden. Üblicherweise liegt die Partikelgrösse zwischen >0 und 8 mm. Vorzugsweise ist der Anteil unter 1 mm geringer als 10 Gew.-% und der Anteil über 2 mm bei über 75 Gew.-%, da der Bindemittelbedarf durch kleinere Partikel zusätzlich erhöht wird.

Die Menge des Polystyrols in Form von geschäumten Polystyrolperlen und des Polystyrols in Form von geschäumtem Polystyrolgranulat mit einer durch mechanische Belastung beschädigten Oberfläche, d.h. die Summe von c) und d), bezogen auf die Dämmstoff-Trockenzusammensetzung, beträgt mehr als 8 Gewichts-%, bevorzugt mehr als 10 Gewichts-%. Insbesondere beträgt der Anteil des Polystyrols (Summe von c) und d)) zwischen 15 und 45 Gewichts-%, insbesondere zwischen 15 und 40 Gewichts-%, bevorzugt zwischen 20 und 40 Gewichts-%, bezogen auf die Dämmstoff-Trockenzusammensetzung.

Besonders bevorzugt weist das Polystyrol in Form von geschäumten Polystyrolperlen (c) oder in Form von geschäumtem Polystyrolgranulat (d) eine Schüttdichte zwischen 8 und 20 kg/m$^3$, insbesondere zwischen 10 und 18 kg/m$^3$, bevorzugt zwischen 12 und 18 kg/m$^3$, auf.

Für das Wesen der Erfindung ist es wesentlich, dass die Dämmstoff-Trockenzusammensetzung eine Mischung von Polystyrol in Form von geschäumten Polystyrolperlen (c) zu Polystyrol in Form von geschäumtem Polystyrolgranulat (d) mit einer durch mechanische Belastung beschädigten Oberfläche enthält. Das Gewichtsverhältnis von Polystyrol in Form von geschäumten Polystyrolperlen (c) zu Polystyrol in Form von geschäumtem Polystyrolgranulat (d) mit einer durch mechanische Belastung beschädigten Oberfläche ist insbesondere einen Wert zwischen 0.1 und 5, insbesondere zwischen 0.2 und 3, bevorzugt zwischen 0.3 und 2.

Werden lediglich geschäumte Polystyrolperlen (c) verwendet (d.h. Menge von d) = 0), ist die Dämmstoffzusammensetzung mit normalen Mitteln nicht verdicht- und glättbar, da die Perlen aufgrund ihrer Härte und Kugelform ausweichen, und damit eine Verdichtung in einem grossen Raum unmöglich machen. In diesem Verdichtungszustand ist die Dämmung nicht begehbar. Selbst wenn diese Dämmstoffzusammensetzung mit viel Geschick in einer Form ausreichend verdichtet wird, so zeigt die erhärtete Dämmung eine hohe dynamische Steifigkeit und ist aufgrund dessen als Trittschalldämmung ungeeignet.

Wird lediglich geschäumtes Polystyrolgranulat mit einer durch mechanische Belastung beschädigten Oberfläche (d) eingesetzt (d.h. Menge von c) = 0), so erfordert die Dämmstoff-Trockenzusammensetzung stark erhöhtes Anmachwasser, weshalb die Trocknungsdauer erheblich verzögert ist. Weiters kann aufgrund des erhöhten w/z-Wertes und der geringeren Eigenfestigkeit des Polystyrolgranulates nicht im gleichen Ausmass reduziert werden, als dies der Fall ist, wenn mit einer Mischung von c) und d) gearbeitet wird.

In einer besonders bevorzugten Ausführungsform enthält die Dämmstoff-Trockenzusammensetzung weiterhin mindestens ein Wasserrückhaltemittel. Ein "Wasserrückhaltemittel" wird in diesem gesamten Dokument wie folgt definiert:

Ein Wasserrückhaltemittel ist im Sinne dieses Patentes eine Substanz, welche nach einer modifizierten Wolf-II-Methode, wie sie im Folgenden erklärt ist , ein Wasserrückhaltevermögen aufweist:

- von mehr als 85 % für ein organisches Wasserrückhaltemittel bei einem Wasser/Zement-Verhältnis (="w/z") von 0.7
- von mehr als 33% für ein anorganisches Wasserrückhaltemittel bei einem w/z von 0.4
- von mehr als 85 % bei einem w/z von 0.7 für eine Mischung von organischen und anorganischen Wasserrückhaltemittel:

Es wird auf einer ebenen Glasplatte ein Zellulosefilterpapier (Schleicher & Schuell, D-37582 Dassel, Nr. 2294 $\varnothing$ 11 cm), dann ein dünnes Zellulosevlies (Schleicher & Schuell, D-37582 Dassel, Nr. 0980/1 $\varnothing$ 11 cm) aufgelegt und darauf ein Plastikring (Innendurchmesser 90 mm und Höhe 15 mm) gelegt.

Der Zementleim wird durch Mischen während 3 Minuten mit einem Kunststoffspatel von Zement (Milke Cem I 52.5 R Werk Geseke), Wasser, entsprechend einem gewichtsbezogenen Wasser/Zement-Verhältnis (="w/z") von 0.7, beziehungsweise 0.4, und der jeweils als Wasserrückhaltemittel zu testenden Substanz hergestellt und sogleich bündig mit der Oberkante in den Ring eingefüllt (Bedarf ca. 180g Zementleim). Die Dosierung der zu testenden Substanz muss für diesen Test zwischen 0.4 Gew.-% und 5 Gew.-% für ein organisches Wasserrückhaltemittel und zwischen 12 Gew.-% und 15 Gew.-% für ein anorganisches Wasserrückhaltemittel betragen. Für eine Mischung von anorganischen und organischen Wasserrückhaltemitteln beträgt für diesen Test die Dosierung zwischen 0.4 Gew.-% und 5 Gew.-% für das organische Wasserrückhaltemittel und zwischen 12 Gew.-% und 15 Gew.-% für das anorganisches Wasserrückhaltemittel.

Nach 3 Minuten Einwirkdauer ab Ringbefüllung wird die Wasserabgabe an das Zellulosefilterpapier durch Differenzwiegung desselben vor und nach der Wasseraufnahme ermittelt und jeweils auf 100g Zementleim rückgerechnet. Aus der so bestimmten Wasserabgabe $m_x$ für die als Wasserrückhaltemittel zu testende Substanz und $m_{ref}$ für den Nullversuch, d.h. Zement ohne Substanz, wird das Wasserrückhaltevermögen ($WRV$) nach der folgenden Formel bestimmt.

$$WRV = \frac{m_{ref} - m_x}{m_{ref}}$$

Das Wasserrückhaltemittel kann eine organische oder eine anorganische Verbindung sein. Anorganische Wasserrückhaltemittel lassen sich typischerweise bei den Mehrschichtsilikaten wie Bentonit, Smektit, Montomorillonit, oder auch bei kalzinierten Kaolinen, insbesondere Metakaolin, finden. Als besonders geeignetes anorganisches Wasserrückhaltemittel hat sich Metakaolin erwiesen.Organische Wasserrückhaltemittel lassen sind typischerweise bei Celluloseethern, Methylcellulosen, Hydroxypropylmethylcellulosen, Hydroxyethylcellulosen, Carboxymethylcellulosen, und weiteren Cellulosederivaten, Stärkeethern, Welan Gum oder synthethischen Verdickern wie Polyacrylsäure oder PU-Acrylaten finden. Als besonders geeignet haben sich Hydroxyalkylmethylcellulosen, insbesondere Hydroxypropylmethylcellulosen und Hydroxyethylmethylcellulosen gezeigt.

Der verwendete Gewichtsanteil der Summe aller Wasserrückhaltemittel hängt stark von den erwünschten Dämm- und mechanischen Eigenschaften der mit Wasser ausgehärteten Dämmstoff-Trockenzusammensetzung sowie des verwendeten Wasserrückhaltemittels ab und bewegt sich typischerweise zwischen 0.1 und 25 Gew.-%, bezogen auf das hydraulische Bindemittel.

Anorganische Wasserrückhaltemittel werden vorteilhaft in einer Konzentration zwischen 0.2 und 25 Gew.-%, bevorzugt zwischen 0.5 und 9 Gew.-%, insbesondere zwischen 0.5 und 3 Gew.-%, bezogen auf das hydraulische Bindemittel, insbesondere bezogen auf den Zement, eingesetzt. Organische Wasserrückhaltemittel werden vorteilhaft in einer Konzentration zwischen 0.1 und 9 Gew.-%, bevorzugt zwischen 0.5 und 5 Gew.-%, insbesondere zwischen 0.7 und 4 Gew.-%, bezogen auf das hydraulische Bindemittel, insbesondere bezogen auf den Zement, eingesetzt.

Besonders bevorzugt werden organische Wasserrückhaltemittel.

Der Einsatz eines Wasserrückhaltemittel ist dahin gehend vorteilhaft, als dass sich Dämmstoff-Trockenzusammensetzungen formulieren lassen, welche einen besonders kleinen Anteil an hydraulischen Bindemittel und vor allem kleinen Wasserbedarf für eine rasche Belegereife aufweisen.

Die vorteilhafte Wirkung des Wasserrückhaltemittels wird dadurch erklärt, dass in den Dämmstoffen des Standes der Technik das eingesetzte Wasser, welches für die hydraulische Aushärtung des Zementes benötigt wird, durch das geschäumte Polystyrol üblicherweise in beträchtlichem Umfang aufgenommen wird, so dass an deren Oberfläche das Abbinden des hydraulischen Bindemittels gestört ist, und deshalb an der Polystyrol-Schaumstoffoberfläche kein richtiger Verbund entsteht. Dies ist umso ausgeprägter je kleiner der Anteil des hydraulischen Bindemittels bezogen auf das Polystyrol und je geringer die Anmachwassermenge ist. Durch den Einsatz von Wasserrückhaltemitteln wird dies stark verhindert und das hydraulische Bindemittel bildet nach dem Abbinden mit der Polystyrol-Schaumstoffoberfläche einen ausgezeichneten Verbund, auch wenn der Anteil des hydraulischen Bindemittels im Vergleich zum Polystyrol-Schaumstoff klein ist. Der Einsatz des Wasserrückhaltemittels erlaubt es einen kleinen w/z-Faktor (Wasser/Zement-Gewichts-Verhältnis) zu verwenden und dadurch eine Verzögerung des Abbindens und Verschlechterung der mechanischen Eigenschaften weitgehend verhindert werden kann.

Gegebenenfalls weist die Dämmstoff-Trockenzusammensetzung zusätzlich noch mindestens einen Füllstoff auf, welcher kein geschäumtes Polystyrol, kein hydraulisches Bindemittel, kein Dispersionskunststoff und kein Wasserrückhaltemittel ist und dessen mittlere Teilchengrösse so gewählt ist, dass das Verhältnis mittlere Teilchengrösse des Füllstoffs zu mittlere Teilchengrösse des geschäumten Polystyrols kleiner 1, besonders zwischen 0.01 und 0.5, insbesondere zwischen 0.02 und 0.25 ist.

Solche Füllstoffe können elastisch oder starr sein. Bevorzugt sind jedoch elastische Füllstoffe. Als starre Füllstoffe kommen beispielsweise Glaskugeln, Glashohlkugeln, Blähglaskugeln, Sand, Quarzmehl in Betracht. Als elastische Füllstoffe kommen insbesondere Gummi oder Kautschuk, bevorzugt in Granulat- oder Pulverform, in Betracht.

Der Einsatz dieser Füllstoffe ist speziell dann vorteilhaft, wenn ein Dämmstoff mit geringem Anteil an hydraulischen Bindemittel, typischerweise im Bereich von zwischen 15 und 30 kg pro m$^3$ der Zusammensetzung, erzielt werden soll.

Im Falle von grösseren Anteilen an hydraulischen Bindemitteln, typischerweise einem Bindemittelanteil von mehr als 25 kg pro m$^3$ der Zusammensetzung, kann die Dämmstoff-Trockenzusammensetzung spezielle Feststoffpartikel enthalten, wie zum Beispiel Glimmerplättchen, recycliertes Altreifengranulat, wasseraufnehmende Kunststoff-Fasern, hydrophobe Kunststoffpartikel, wie beispielsweise Fetzen von Polyethylen- oder Polypropylenfolien. Durch diese Partikel können beabsichtigt Sollbruchstellen in das Dämmmaterial eingebracht werden, was zu geringeren dynamischen Steifigkeiten, bis zu 5 MN/m$^3$, und damit zu besseren Dämmeigenschaften, verglichen mit denselben Zusammensetzungen ohne diese Feststoffpartikel, führt, ohne dass die mechanische Belastbarkeit allzu stark verringert wird. Die Partikelgrösse ist sehr stark abhängig von der individuellen Zusammensetzung beziehungsweise den Produktanforderungen und muss im Einzelfall durch den Fachmann im Rahmen seines Wissens bestimmt, beziehungsweise optimiert, werden.

Die Dämmstoff-Trockenzusammensetzung kann des Weiteren noch andere Bestandteile enthalten. Solche Bestandteile sind beispielsweise Pigmente, Flammschutzmittel, UV-Stabilisatoren, Komplexbildner, Erhärtungs-und/oder Abbinde-Beschleuniger, Filmbildehilfsmittel, Erhärtungs- und/oder Abbinde-Verzögerer, Korrosionsinhibitoren, Hydrophobierungsmittel, Luftporenbildner, Entschäumer, Farbstoffe, Tenside, Geruchsstoffe oder Biozide.

Es kann unter Umständen weiterhin von Vorteil sein, dass die Dämmstoff-Trockenzusammensetzung frei von amorpher Kieselsäure ist.

Der Fachmann kann sein Fachwissen über Granulometrie heranziehen, um die Dämmstoff-Trockenzusammensetzung auf die Teilchengrösse der einzelnen Bestandteile hin zu optimieren.

Die Trockenrohschüttdichte der Dämmstoff-Trockenzusammensetzung ist vorzugsweise weniger als 110 kg/m$^3$, insbesondere von weniger als 100 kg/m$^3$, bevorzugt zwischen 20 und 100 kg/m$^3$.

Ein Dämmstoff basierend auf der Technologie des Standes der Technik weist -insbesondere bei tieferem Zementanteil- einen bedeutend schlechteren Verbund im ausgehärteten Dämmstoff auf, das heisst, dass bei dessen Belastungen, wie sie beispielsweise durch ein Begehen entstehen, die Bindungen zwischen den Granulatpartikeln brechen und in grossem Ausmass Schaumstoffgranulat-Partikel ausbrechen, und demzufolge der Dämmstoff "zerkrümmelt".

Die Dämmstoff-Trockenzusammensetzung kann mit üblichen Verfahren hergestellt werden und in Abwesenheit von Wasser oder Feuchtigkeit über längere Zeit verpackt gelagert werden. Es ist jedoch durchaus auch möglich, dass die Dämmstoff-Trockenzusammensetzung vor Ort bei der Applikation gemischt wird.

Die Dämmstoff-Trockenzusammensetzung kommt mit Wasser vermischt zum Einsatz. Somit stellt ein weiterer Aspekt der vorliegenden Erfindung eine Dämmstoffzusammensetzung dar, welche aus einer vorgängig beschriebenen Dämmstoff-Trockenzusammensetzung und Wasser erhalten wird.

Die Menge des eingesetzten Wassers hängt stark von der Menge des hydraulischen Bindemittels ab. Falls das hydraulische Bindemittel Zement, insbesondere Portlandzement, enthält oder daraus besteht ist die Menge des Wasser vorteilhaft so bemessen ist, dass das Wasser/Zement-Verhältnis von 0.2 bis 3, insbesondere 0.3 bis 2.5, bevorzugt 0.3 bis 1.5, ist. Das Wasser/Zement- Verhältnis kann somit abweichen von demjenigen, welches der Zement-beziehungsweise Betontechnologe üblicherweise anwendet.

Die Nassrohschüttdichte, beziehungsweise die Dichte unmittelbar nach Applikation (‚Frischmörtelrohdichte'), der Dämmstoffzusammensetzung ist vorzugsweise weniger als 140 kg/m$^3$, insbesondere von weniger als 130 kg/m$^3$, bevorzugt zwischen 45 und 120 kg/m$^3$, meist bevorzugt zwischen 45 und 100 kg/m$^3$.

Die Dämmstoffzusammensetzung kann unmittelbar vor Anwendung aus den einzelnen Bestandteilen oder Halbfabrikaten hergestellt werden oder sie kann industriell gefertigt und/oder vermischt an den Ort der Applikation transportiert werden.

Das Wasser wird unmittelbar vor der Applikation zur Dämmstoffzusammensetzung oder beim Mischen der einzelnen Komponenten davon zugemischt.

Hierfür sind unterschiedliche Varianten der Herstellung geeignet.

In einer ersten Variante wird das hydraulische Bindemittel mit dem Grossteil, typischerweise etwa 90%, des geschäumten Polystyrols vermischt. Hierzu werden anschliessend zuerst das Wasser, dann der Dispersionskunststoff und anschliessend der Rest des Polystyrols zugemischt. Falls eine Kunststoffdispersion verwendet wird, kann diese vorab mit dem Wasser vermischt und somit gleichzeitig mit dem Wasser zugefügt werden. Wird ein Kunststoffdispersionspulver eingesetzt, so kann dieses auch vor der Wasserzugabe mit dem hydraulischen Bindemittel, allenfalls dem Wasserrückhaltemittel und dem geschäumten Polystyrol vermischt werden. Es kann sich als vorteilhaft erweisen, wenn das Wasser und die Kunststoffdispersion nicht auf einen Schlag sondern portionenweise unter Rühren zugegeben werden.

Eine weitere Variante der Herstellung besteht darin, dass das geschäumte Schaumstoffgranulat vorgelegt wird, dann das Wasser, hierauf das allenfalls vorhandene Wasserrückhaltemittel, dann das hydraulische Bindemittel und anschliessend der Dispersionskunststoff, gegebenenfalls in Form einer Dispersion zugemischt wird.

In einer bevorzugten Variante der Herstellung wird das hydraulische Bindemittel mit dem allenfalls vorhandenen Wasserrückhaltemittel sowie dem Dispersionskunststoff vorgemischt, sodann wird das Bindemittel mit dem Wasser angemischt und schliesslich wird das geschäumte Polystyrol beigemischt. Es kann sich auch hier als vorteilhaft erweisen, wenn die Komponenten nicht auf einen Schlag, sondern portionenweise unter Rühren zugegeben werden.

Eine weitere bevorzugte Variante der Herstellung besteht darin, dass zuerst das hydraulische Bindemittel, mit dem allenfalls vorhandenen Wasserrückhaltemittel gemischt werden, ein Teil des Wassers und anschliessend diese Vormischung dem geschäumten Polystyrol in zumindest zwei Stufen unter dosierter Zugabe des Wassers zugemischt wird. Das Mischgefäss wird zunächst mit etwa drei Viertel der Gesamtmenge des Polystyrols beschickt, bevor der vorgemischte Bindemittelanteil mit dem dosierten Anmachwasser zugegeben wird. Anschliessend, oder mit dem Anmachwasser gemischt, wird der Dispersionskunststoff beigefügt. Das restliche Polystyrol wird dann während des Mischvorganges eingefüllt.

Eine weitere Ausführungsform der Herstellung besteht darin, dass das geschäumte Polystyrol mit dem hydraulischen Bindemittel, allenfalls vorhanden Wasserrückhaltemittel und dem Dispersionskunststoff gemischt werden, und anschliessend das Wasser zugemischt wird.

Bei allen diesen beschriebenen Herstellvarianten wird der Mischvorgang vorteilhaft in einem für eine Druckluftförderung des Mischgutes ausgelegten Mischkessel durchgeführt. Nach dem Mischvorgang, kann die jeweilige angemachte Mischung dann mit Hilfe von Druckluft ausgefördert und über eine Schlauchleitung zum Einbringungsort transportiert werden.

Eine weitere Möglichkeit der Herstellung besteht auch darin, dass die einzelnen Komponenten im richtigen Verhältnis kontinuierlich dosiert und in einer kurzen Mischstrecke kontinuierlich gemischt und gefördert werden.

Zur Wärmedämmung wird die Dämmstoffzusammensetzung zwischen zwei Materialien unterschiedlicher Temperatur angebracht und hat die Funktion, zwischen diesen den Wärmeenergietransfer zu verhindern. Es ist klar, dass deshalb diese Dämmstoffzusammensetzung einerseits zur Wärmeisolation oder aber auch zur Kälteisolation verwendet werden kann. Zur Trittschalldämmung ist es wichtig, die Fläche, welche typischerweise im Wesentlichen horizontal angeordnet ist, auf welcher die Schritte erfolgen, oder einer damit direkt verbundenen Struktur von der restlichen Gebäudestruktur durch Anbringen einer Dämmstoffzusammensetzung dazwischen voneinander akustisch abzukoppeln. Nach dem Abbinden der beschriebenen Dämmstoffzusammensetzungen weisen die so hergestellten Dämmstoffe bereits in geringen Schichtdicken von wenigen Zentimetern exzellente Dämmeigenschaften auf. Somit ist ein weiterer Gegenstand der vorliegenden Erfindung ein Dämmstoff, welcher aus der einer vorgängig beschriebenen Dämmstoff-Trockenzusammensetzung nach Vermischung mit Wasser, bzw. aus einer vorgängig beschriebenen Dämmstoffzusammensetzung nach Reaktion des hydraulischen Bindemittels mit Wasser, erhalten wird.

Die beschriebene Dämmstoff-Trockenzusammensetzung, bzw. die beschriebene Dämmstoffzusammensetzung, findet insbesondere in der Herstellung von Estrichboden Verwendung. Daneben kann sie jedoch auch als Verfüllung von Hohlräumen, welche durch im wesentlichen vertikal angeordneten Flächen begrenzt sind, verwendet werden. Ein Bespiel für eine solche Anwendung ist die Isolation zwischen zwei Mauern.

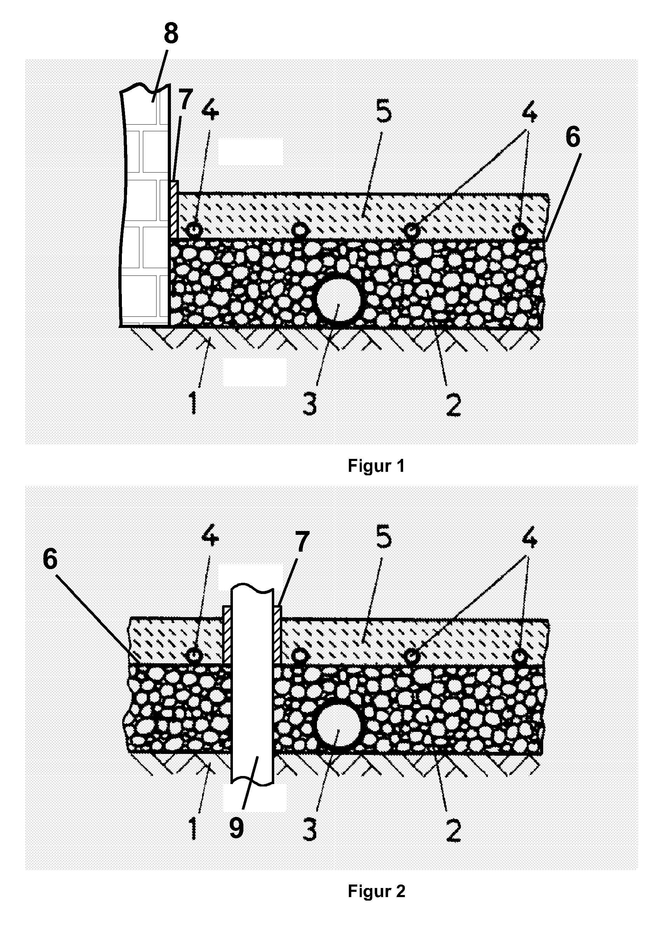

Ein Estrichbodenaufbau erfolgt typischerweise wie in Figur 1 und Figur 2 schematisch dargestellt. Auf den Boden 1 des Bauwerks wird die mit Wasser vermischte Dämmstoff-Trockenzusammensetzung als Dämmstoffzusammensetzung 2 in einer üblichen Schichtdicke zwischen 5 und 10 cm aufgebracht. Immer häufiger werden zur Wärmeisolierung gegenüber Kellerdecken und bei Dachterrassenwohnungen Schichtdicken von 15 cm und mehr eingebracht. Speziell bei diesen erhöhten Dämmstärken verlängert sich die Trocknung von Dämmungen des Standes der Technik auf 3-9 Wochen.

In der Dämmschicht sind gegebenenfalls Installationsrohre 3 vorhanden. Falls solche Rohre vorhanden sind, ist darauf zu achten, dass sie gut durch die Dämmstoffzusammensetzung 2 umhüllt werden, so dass sich keine Brücken für Schall- oder Wärmeenergie bilden können. Frühestens sobald die Dämmstoffzusammensetzung genügend Festigkeit aufgebaut hat, so dass sie begehbar ist, kann gegebenenfalls eine dünne Trennfolie 6, üblicherweise aus Polyethylen, und gegebenenfalls Fussbodenheizungsrohre 4 verlegt werden. Anschliessend wird ein Zementestrich 5 aufgebracht. Um eine gute Wärme- und Trittschalldämmung zu erreichen, ist darauf zu achten, dass der Zementestrich 5 oder darauf angebrachte Deckbelege stets durch weitere Dämmmaterialien 7 wie Schaumstoffstreifen durch die Dämmschicht 2 durchlaufende Rohre oder Leitungen 9 genügend abgedämmt ist. Eine solche Trennungsschicht mit Dämmeigenschaften ist vorteilhaft ebenfalls im Wandbereich zwischen Wand 8, typischerweise aus Beton oder Backstein gefertigt, und Zementestrich 5 anzubringen.

Die Dämmschicht hat neben der Dämmfunktion gleichzeitig noch die Funktion einer Ausgleichsschicht zum Ausgleichen von Bodenunebenheiten und erleichtert den Einbau von Leitungs- und Installationsrohren. Dies ist besonders wichtig in Renovationsarbeiten, wo für das Einlegen der Leitungen und Rohre der aufwendige und - insbesondere bei einem Betonbodenmühsame Arbeitsschritt des Aufspitzens oder Einfräsens entlang des Bodens wegfällt. Zudem ist es durch das stark reduzierte Gewicht, im Vergleich zu einem konventionellen Ausgleichsboden, möglich auch Böden mit kleiner Tragkraftreserve effizient abzudämmen.

Die erfindungsgemässe Dämmstoffzusammensetzung erhärtet mit Wasser zu einer Masse, bei der das geschäumte Polystyrol durch die Matrix des abgebundenen hydraulischen Bindemittels miteinander verbunden ist. Die Schichtdicke des Zementes ist klein und beträgt typischerweise weniger als 0.1 mm.

Die Dichte des Dämmstoffs nach Abbinden und Trocknen, d.h. nach Erreichen der Gleichgewichtsfeuchte, ist vorzugsweise weniger als 120 kg/m$^3$, insbesondere von weniger als 100 kg/m$^3$, bevorzugt zwischen 35 und 90 kg/m$^3$.

Es ist selbstverständlich auch möglich, durch den Einsatz von mehr hydraulischen Bindemittel, und damit weniger geschäumten Polystyrol, die Festigkeit der Dämmstoffzusammensetzung zu erhöhen, wodurch allerdings bei markanter Erhöhung der Festigkeit die guten Dämmeigenschaften weitgehend verloren gehen. In Fällen, wo die Dämmeigenschaften nicht von primärem Interesse sind oder gar nicht notwendig sind, kann eine solche Zusammensetzung durchaus interessante Anwendungen haben. So liesse sich beispielsweise in gewissen Grenzen das Gewicht eines Bodens für höhere Belastungen markant reduzieren, ohne dass starke Einbussen an der Festigkeit zu erwarten sind.

Für den Einsatz als Dämmstoff ist jedoch ein möglichst grosser Anteil an geschäumtem Polystyrol, wie er von der Eigenfestigkeit der ausgehärteten Dämmstoffzusammensetzung her noch akzeptierbar ist, anzustreben. Aufgrund der Konsistenz der mit Wasser vermischten Dämmstoff-Trockenzusammensetzung ist einerseits das Egalisieren der Oberfläche vereinfacht und andererseits ein Anbringen auf einer geneigten Fläche ermöglicht. So ist beispielsweise mit derselben Dämmstoffzusammensetzung möglich ein Flachdach, aber auch ein Steildach abzudämmen.

Es wird ermöglicht mit geringem Aufwand eine fugenlose, und damit einwandfrei dämmende, Wärme- und Trittschall-Dämmschicht auch in grossen Schichtstärken zu erstellen, welche nach kurzer Zeit bereits belastbar, beispielsweise begehbar, ist.

Die erfindungsgemässen Dämmstoffe, bzw. die Dämmstoffzusammensetzungen nach der Aushärtung mit Wasser, verfügen über erstaunlich gute Wärme- und Trittschalldämmungseigenschaften. Es können Wärmedämmeigenschaften bis unter 0.045 W/mK erreicht werden. Es können dynamische Steifigkeiten von unter 20 MN/m$^3$, insbesondere tiefer als 10 MN/m$^3$ erreicht werden. Solche Werte führen erfahrungsgemäss zu einer Trittschallminderung von mehr als 30 dB.

Eine bevorzugte Ausführungsform, in welcher die Dämmstoffzusammensetzung ein Menge an hydraulischen Bindemittel von 15-35 kg/m$^3$, insbesondere 15 - 30 kg/m$^3$, bezogen auf die nicht ausgehärtete Dämmzusammensetzung, aufweist, zeichnet sich durch äusserst gute Trittschall- und Wärmedämmungen aus. Diese Ausführungsform findet vor allem Anwendung in den Fällen, wo primär hohe bis höchste Trittschall- und Wärmedämmungen gefordert sind, und die Anforderungen an die mechanische Belastbarkeit des Dämmstoffs geringer sind. Es sind mit Dämmstoffzusammensetzungen dieser Ausführungsart Wärmeleitfähigkeiten $\lambda_{10°C, \text{trocken}}$ (getrocknet, gemessen bei 10°C Mitteltemperatur in Anlehnung an ÖNorm B 6015, Teil 1) von ≤ 0.038 W/mK möglich.

Eine andere bevorzugte Ausführungsform, in welcher die Dämmstoffzusammensetzung eine Menge an hydraulischen Bindemittels von 35 - 50 kg/m$^3$, insbesondere 40 - 50 kg/m$^3$, bezogen auf die nicht ausgehärtete Dämmzusammensetzung, aufweist, zeichnet sich durch äusserst schnelle Trocknung und exzellent hohe mechanische Festigkeiten aus. Diese Ausführungsform findet vor allem Anwendung in den Fällen, wo primär höchste Belastbarkeiten und schnellste Begehbarkeiten gefordert sind, und die Anforderungen an die Trittschall- und Wärmedämmungen zwar vorhanden und auf hohem, aber nicht auf höchstem Niveau gefordert sind. Es sind mit Dämmstoffzusammensetzungen dieser Ausführungsart Wärmeleitfähigkeiten $\lambda_{10°C, \text{trocken}}$ (getrocknet, gemessen bei 10°C Mitteltemperatur in Anlehnung an ÖNorm B 6015, Teil 1) von ≤ 0.043 W/mK möglich.

In einer weiter bevorzugten Ausführungsform, in welcher die Dämmstoffzusammensetzung eine Menge an hydraulischen Bindemittel von 30 - 45 kg/m$^3$, insbesondere 30 - 40 kg/m$^3$, bezogen auf die nicht ausgehärtete Dämmzusammensetzung, aufweist, zeichnet sich durch stark verbesserte Trittschall- und Wärmedämmungen und stark verbesserte hohe mechanische Festigkeiten aus. Diese Ausführungsform findet vor allem Anwendung in den Fällen, wo ein guter Mix von Belastbarkeit, schneller Begehbarkeiten und hohe Anforderungen an die Trittschall- und Wärmedämmungen gefordert sind. Es sind mit Dämmstoffzusammensetzungen dieser Ausführungsart Wärmeleitfähigkeiten $\lambda_{10°C, \text{trocken}}$ (getrocknet, gemessen bei 10°C Mitteltemperatur in Anlehnung an ÖNorm B 6015, Teil 1) von ≤ 0.040 W/mK möglich.

Die Dämmstoffe sind nach kurzer Zeit bereits belastbar. Die Belastbarkeit wird üblicherweise durch die Begehbarkeit bestimmt. Es lassen sich erfindungsgemässe Dämmstoffe erreichen, welche nach 1 Tag, zuweilen sogar nach 4 Stunden, bereits begehbar sind.

Die Dämmstoffzusammensetzungen zeichnen sich durch eine exzellente Verarbeitbarkeit gekoppelt mit einer kurzen Belegereife aus. Unter Belegereife versteht man die Zeit, welche vergeht, bis ein derartig flächig aufgetragener Dämmstoff überschichtet werden kann, ohne dass die Überschussfeuchtigkeit im Dämmstoff zu Problemen Anlass gibt. Als Grenzwert für die maximal zulässige Überschussfeuchtigkeit für Anwendungen unter schwimmend verlegten Unterlagsböden im Wohn- und Verwaltungsbau kann ein dickenunabhängiger Wert von 3 kg/m$^2$ angesehen werden. Diese Überschussfeuchte diffundiert langsam durch die Baustoffe und verursacht erfahrungsgemäss keine Schäden. Dieser flächen- und nicht volumenabhängige Grenzwert bedingt also je nach Schichtstärke unterschiedliche Restfeuchten je Volumeneinheit, die bei Belegung akzeptiert werden können. Höhere Schüttstärken trocknen daher nicht nur langsamer, sondern verlangen auch einen höheren Trocknungsgrad, um diese Überschussfeuchte von 3 kg/m$^2$ zu unterschreiten. Speziell hierin liegt der Vorteil der erfindungsgemässen Dämmstoff-Trockenzusammensetzung, die mit geringen Anmachwassergehalten verarbeitet werden kann. Es lassen sich mit den erfindungsgemässen Dämmstoffzusammensetzungen Belegereifen von einem Tag erreichen. Mit dem Einsatz von zementösen Schnellbindemitteln lassen sich sogar Belegereifen von 3 bis 4 Stunden erreichen, was völlig neue Einsatzmöglichkeiten, insbesondere im Bereich von Dachisolierungen, erlaubt.

## Bezugszeichenliste

| | | | |
|---|---|---|---|
| 1 | Boden | 8 | Wand |
| 2 | Dämmstoffzusammensetzung | 9 | Rohre oder Leitungen |
| 3 | Installationsrohre | 10 | Probe, Dämmstoff |
| 4 | Fussbodenheizungsrohre | 11 | Estrich |
| 5 | Zementestrich | 12 | Beschleunigungsaufnehmer |
| 6 | Trennfolie | 13 | Impulshammer |
| 7 | Dämmmaterialien | | |

## Beispiele

Die folgenden Beispiele illustrieren die vorliegende Erfindung.

## Verwendete Rohstoffe

Tabelle 1. Eingesetzten Rohstoffe.

| Kommerzieller Name | Lieferant | Art | Abkürzung |
|---|---|---|---|
| Culminal C8315 | Hercules GmbH; Aqualon Division, Deutschland | Methyl-Hydroxyethyl-Cellulose | |
| Milke Cem I 52.5 R | Milke, Werk Geseke, Deutschland | Portlandzement | 'CEM' |
| Metastar 501 | Imerys England | Metakaolin | 'A-WRHM' |
| Methocel 228 | Dow Deutschland | Hydroxypropylmethyl-cellulose | 'O-WRHM' |
| Methocel 267 | Dow Deutschland | Hydroxyethylmethyl-cellulose | 'O-WRHM' |
| Vinnapas LL 5044 N | Wacker Polymer Systems, Deutschland | Vinylacetat-Ethylen-Copolymer Pulverdispersion | 'DispKun' |
| Welan Gum | Kelco International, Grossbritanien | Wasserlösliches Poly-saccharid aus Fermen-tationsprozess gewonnen | |

**Wasserrückhaltemittel**

Die Substanzen in Tabelle 2 wurden, wie beschrieben, bei einem w/z-Verhältnis von 0.7 bzw. 0.4 auf das Wasserrückhaltevermögen hin mittels modifizierter Wolf-II-Methode untersucht.

Tabelle 2. Wasserrückhaltemittel.

| Substanz | Konzentration | *WRV* | w/z |
|---|---|---|---|
| Metastar 501 | 8 Gew.-% | 22% | 0.4 |
| Metastar 501 | 13 Gew.-% | 39% | 0.4 |
| | | | |
| Culminal C8315 | 0.7 Gew.-% | 95% | 0.7 |
| Culminal C8315 | 1.0 Gew.-% | 99% | 0.7 |
| | | | |
| Methocell 228 | 0.2 Gew.-% | 41% | 0.7 |
| Methocell 228 | 0.7 Gew.-% | 93% | 0.7 |
| Methocell 228 | 1.0 Gew.-% | 98% | 0.7 |
| Methocell 228 | 2.0 Gew.-% | 99% | 0.7 |
| | | | |
| Methocell 267 | 0.2 Gew.-% | 75% | 0.7 |
| Methocell 267 | 0.7 Gew.-% | 99% | 0.7 |
| | | | |
| Welan Gum | 0.75 Gew.-% | 92% | 0.7 |

**Dämmstoffzusammensetzung- und Probekörper-Herstellung**

Zur Herstellung der Probekörper wurde als hydraulisches Bindemittel ein sehr frühhochfester Portlandzement (Milke Cem I 52.5 R aus dem Werk Geseke) ("Cem") beziehungsweise ein ternäres System ("Schnellbinder") aus Tonerdeschmelzzement (Anteil: >25 Gew.-%), Halbhydratgips (Anteil: >30 Gew.-%) und Portlandzement (Anteil: >10 Gew.-%) verwendet.

Es wurden die erfindungsgemässen (*B1, B2*) sowie Vergleichs-(*Ref.1* bis *Ref. 5*) Zusammensetzungen gemäss Tabelle 3 hergestellt. Die dort angegebenen Mengen der mit Wasser vermischten Dämmstoffzusammensetzungen beziehen sich auf kg/m$^3$ der unausgehärteten Nassmischung.

Tabelle 3. Dämmstoff-Trockenzusammensetzungen bzw.

| | *Ref. 1* | *Ref. 2* | *Ref. 3* | *Ref. 4* | *B1* | *Ref. 5* | *B2* |
|---|---|---|---|---|---|---|---|
| Cem | 53.68 | 40 | 21.46 | 35.00 | 35.00 | - | - |
| Schnellbinder | - | - | - | - | - | 30.00 | 23.00 |
| DispKun | 4.95 | 2.8 | 2.15 | 2.65 | 2.65 | 2.5 | 2.5 |
| PS$_{neu}$ | - | - | - | 12.00 | 8.34 | - | 4.67 |
| PS$_{recyl}$ | 15.0 | 14.5 | 15.0 | - | 5.22 | 15.0 | 9.4 |
| Methocel 228 | 0.41 | 0.5 | 0.64 | 0.35 | 0.4 | 0.5 | 0.5 |
| Wasser | 59.1 | 45.0 | 43.0 | 25.0 | 30.0 | 45.0 | 32.0 |
| Frischmörtelrohdichte [g/l] | 133.14 | 102.8 | 82.25 | 75 | 81.61 | 93.00 | 72.07 |
| Cem [%]* | 40.3 | 38.9 | 26.1 | 46.7 | 42.9 | - | - |

(fortgesetzt)

| | Ref. 1 | Ref. 2 | Ref. 3 | Ref. 4 | B1 | Ref. 5 | B2 |
|---|---|---|---|---|---|---|---|
| Schnellbinder [%]* | - | - | - | - | - | 32.3 | 31.9 |
| DispKun [%]* | 3.72 | 2.72 | 2.61 | 3.53 | 3.25 | 2.69 | 3.47 |
| Polystyrol [%]* | 11.3 | 14.1 | 18.2 | 16.0 | 16.6 | 16.1 | 19.5 |
| Wasser [%]* | 44.37 | 43.77 | 52.28 | 33.33 | 36.76 | 48.39 | 44.40 |
| w/z | 1.10 | 1.13 | 2.00 | 0.71 | 0.86 | 1.50 | 1.39 |
| Cem [%]** | 72.50 | 69.20 | 54.68 | 70.00 | 67.82 | - | - |
| Schnellbinder[%]** | - | - | - | - | - | 62.50 | 57.40 |
| DispKun [%]** Polystyrol [%]** | 6.69 20.26 | 4.84 25.09 | 5.48 38.22 | 5.30 24.00 | 5.13 26.27 | 5.21 31.25 | 6.24 35.11 |
| DispKun/Cem | 9.2% | 7.0% | 10.0% | 7.6% | 7.6% | - | - |
| Polystyrol/Cem | 27.9% | 36.3% | 69.9% | 34.3% | 38.7% | - | - |
| O-WRHM/Cem | 0.76% | 1.25% | 2.98% | 1.00% | 1.14% | - | - |
| DispKun/ Schnellbinder | - | - | - | - | - | 8.3% | 10.9% |
| Polystyrol/ Schnellbinder | - | - | - | - | - | 50.0% | 61.2% |
| O-WRHM/ Schnellbinder | - | - | - | - | - | 1.67% | 2.2% |
| $PS_{neu}/PS_{recyl}$ | 0 | 0 | 0 | 1/0 | 1.60 | 0 | 0.50 |
| * bezogen auf Dämmstoffzusammensetzung (d.h. inclusiv Wasser)=100% <br> ** bezogen auf Dämmstoff-Trockenzusammensetzung (d.h. exclusiv Wasser)=100% | | | | | | | |

Dämmstoffzusammensetzungen.

Die Mischungen wurden in einem 10 Liter-Hobart-Mischer wie folgt hergestellt. Geschäumte Polystyrolperlen (Neu-Polystyrol) ("$PS_{neu}$") (Durchmesser 3-6 mm; Schüttdichte 13 kg/m$^3$) und geschäumtes Recyling-Polystyrol ("$PS_{recyl}$") (Durchmesser 0-8 mm; Schüttdichte 13 kg/m$^3$) und das hydraulische Bindemittel mit Wasserrückhaltemittel und Dispersionskunststoff wurde vorgelegt und anschliessend das Wasser während dem Mischen zugeben. Die Mischung wurde 3 Minuten gemischt, 10 Minuten ruhen gelassen und dann unter leichter baustellenüblicher Verdichtung in 20 x 20 x 8 cm Formen gefüllt. Es wurden jeweils 3 Probekörper obiger Abmessungen hergestellt und 28 Tage erhärten gelassen.

Probekörper und Messmethoden

An jeweils zwei der 8 cm dicken Dämmstoff-Probekörper (20 x 20 cm Querschnitt) der jeweiligen Dämmstoff-Zusammensetzungen aus Tabelle 3 wurden mit einer servohydraulischen Druckprüfmaschine linear mit einem Vorschub von 1 mm/sek. bis zu einer Stauchung von 10mm (12.5% Stauchung) mittels Druckplatte belastet. Hierbei wurde die Belastung bei 5 mm Stauchung ("Belastung bei 5 mm Stauchung"), sowie bei 8mm ("Belastung bei 10% Stauchung") sowie die Stauchung bei einer Belastung von 30 kN/m$^2$, entsprechend 3058 Kg/m$^2$, ermittelt. Alle Resultate sind die Mittelwerte der zwei Messungen.

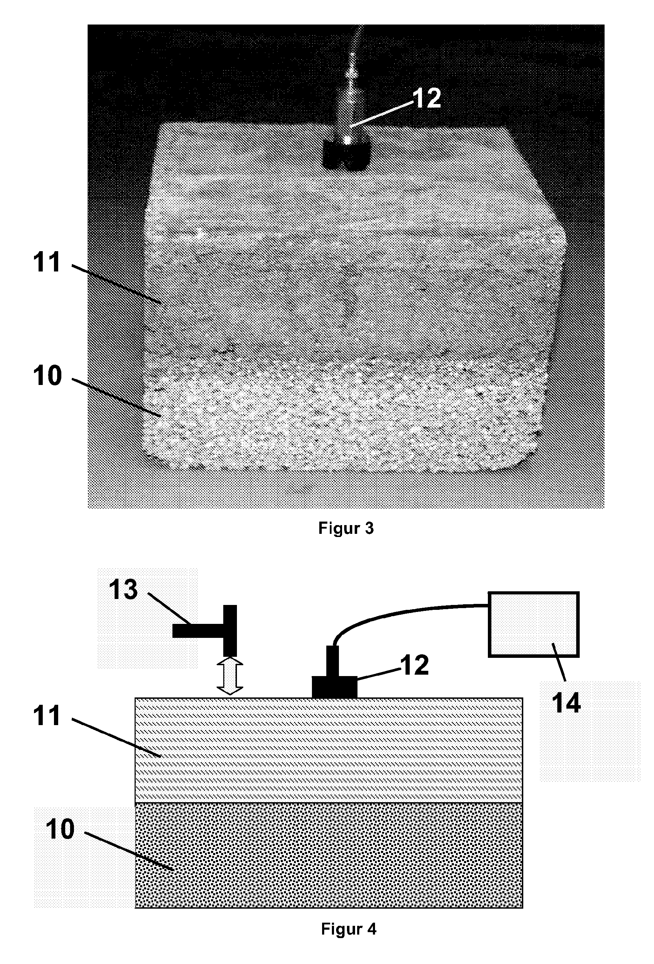

Die dritte Probe 10 jeder Zusammensetzung aus Tabelle 3 wurde mit 8 cm Estrich 11 beschichtet und nach 28 Tagen die dynamische Steifigkeit vor und nach 5 mm Stauchung (über servohydraulische Druckprüfmaschine wie oben beschrieben gestaucht) mittels Ausschwingversuch über Ermittlung der Eigenfrequenz der Probe bestimmt. Die Messanordnung ist hierfür in Figur 3 und Figur 4 abgebildet. Auf die Estrichschicht 11 wurde der Beschleunigungsaufnehmer "PSB 302B03" 12 aufgesetzt. Durch einen leichten Stoss mit einem Impulshammer 13 wurden nun Schwingungen in den Dämmstoff induziert, welche mit dem Beschleunigungsaufnehmer detektiert und in dem FFT-Analysator "AND AD-3524 FFT Analyzer" 14 weiterverarbeitet wurden. Dadurch war es möglich, die Eigenfrequenz des Dämmstoffes zu bestimmen, aus der sich die dynamische Steifigkeit $C_d$ [MN/m$^3$] wie folgt errechnet:

$$C_d = \frac{(2\pi f)^2 m}{A}$$

mit

$f$ = gemessene Eigenfrequenz in Hz
$m$ = schwingende Masse (Estrich)
$A$ = Auflagefläche der Proben

Die Verarbeitbarkeit wird über eine Benotung von 1 (sehr gut) bis 5 (sehr schlecht) qualitativ beurteilt. Bei schlechter Verarbeitung weist die Dämmstoffzusammensetzung bei der Applikation beim leichten Verdichten keinen Druckpunkt auf und das geschäumte Polystyrol weicht aus und erfährt nicht die nötige Verdichtung. Bei guter Verarbeitung ist jedoch ein Druckpunkt vorhanden und ein Egalisieren durch Abziehen mittels aufgekanteter Metallatte ist möglich. Bei der Benotung 5 ist weiters das Abziehen mittels Abziehlatte nicht möglich, da keine ebene und nach Erhärtung begehbare Fläche erhalten wird.

Die Begehbarkeit wurde, wie in der ÖNorm B 6550-1 ("Dämmstoffe für den Wärme- und/oder Schallschutz im Hochbau- Gebundene EPS-Schüttungen") beschrieben, durch Auflegen einer Punktlast von 0,2 kN auf einer runden Auflagefläche von 50 cm$^2$ über einen Zeitraum von 120 Sekunden und einer Messung der Verformung überprüft. Die Begehbarkeit ist zu jenem Zeitpunkt gegeben, an dem die Verformung unter Last weniger als 3 mm beträgt.

Die Belegereife ist dann gegeben, wenn die Überschussfeuchtigkeit, die in der Dämmung durch das Aufbringen des Estrichs eingeschlossen wird, zu keinen Schäden in der Fussboden- und Deckenkonstruktion führt. Für Dämmschüttungen gibt es hier noch keinen allgemein anerkannten Stand der Technik. Von manchen Bauphysikern wird meist ein Grenzwert bezogen auf den Quadratmeter Deckenkonstruktion mit 3 kg/m$^2$ Überschussfeuchte angegeben.

Die Belegereife wurde daher mit 20cm Dämmstärke (übliche Dämmstärke zur thermischen Isolation, die mit herkömmlichen Schüttungen bereits extrem verlängerte Trocknungszeiten ergibt) wie folgt ermittelt: Ein Probekörper der Dimension 20 x 20 x 20 cm wurde auf fünf Seiten luft- und feuchtigkeitsdicht abgedichtet. Dieser Probekörper wurde unmittelbar nach der Herstellung gewogen ($m_0$) und während 3 Monaten in einem Klimaraum mit 80% rel. Luftfeuchtigkeit und einer Temperatur von 23°C gelagert und in der ersten Woche täglich und dann in Abständen von 3 Tagen ($m_x$) gewogen. Die Gewichtsdifferenz zum Ursprungsgewicht ($m_0 - m_x$) entspricht der Wassermenge, welche seit Beginn der Lagerung durch Verdunsten abgegeben wurde. Nach spätestens 3 Monaten ist die Gleichgewichtsfeuchte der Schüttung und damit ein konstanter Wert $m_{eq}$ erreicht. Die Menge Überschusswasser am Tage x ($m_{\ddot{U}\_x}$), welche relevant für die Belegereife ist, berechnet sich wie folgt:

$$m_{\ddot{U}\_x} = m_x - m_{eq}$$

Die Belegereife ist erstmalig zu dem Zeitpunkt x erreicht, bei der die Menge Überschusswasser $m_{\ddot{U}\_x} \leq 120$ g ist (entsprechend $\leq 3$ kg/m$^2$) und ist in Tabelle 4 als "Belegereife" x in Tagen (d) angegeben.

Tabelle 4. Eigenschaften von Dämmstoffzusammensetzungen bzw. Dämmstoffen.

| | *Ref.1* | *Ref. 2* | *Ref. 3* | *Ref.4* | *B1* | *Ref.5* | *B2* |
|---|---|---|---|---|---|---|---|
| Verarbeitbarkeit | 2 | 1 | 2 | 5 | 2 | 1 | 2 |
| Begehbarkeit [d] | 1 | 1 | 4 | 1 | 1 | 1 | 1 |
| Belegereife [d] | 25 | 13 | 19 | 1 | 1 | 13 | 1 |
| Dynamische Steifigkeit | | | | | | | |
| vor Belastung [MN/m$^3$] | 36.9 | 27.3 | 13.5 | 48.8 | 42.6 | 23.3 | 14.0 |
| nach Belastung[MN/m$^3$] | 17.1 | 14.4 | 6.9 | 28.8 | 17.5 | 13.4 | 6.8 |
| Belastung bei 5mm Stauchung [kg/m$^2$] | 4278 | 2853 | 1631 | 5741 | 4910 | 2745 | 2329 |

(fortgesetzt)

| | Ref.1 | Ref. 2 | Ref. 3 | Ref.4 | B1 | Ref.5 | B2 |
|---|---|---|---|---|---|---|---|
| Belastung bei 10% Stauchung [kg/m$^2$] | 5346 | 3655 | 2039 | 6473 | 5739 | 3467 | 2815 |
| Stauchung [mm] (Belastung 30 kN/m$^2$ $\triangleq$ 3058 kg/m$^2$) | 2.38 | 5.77 | 15.2 | 0.79 | 1.15 | 5.89 | 9.3 |

Die Vergleichsbeispiele *Ref. 1* bis *Ref. 3* und *Ref. 5* verwenden lediglich Recycling-Polystyrol, während das Vergleichsbeispiel *Ref. 4* lediglich Neu-Polystyrol verwendet.

Die Ergebnisse der Versuche aus Tabelle 4 zeigen einerseits, dass die Referenzbeispiele *Ref. 1* bis *Ref. 3* und *Ref. 5* eine sehr lange Trockenzeit und eine sehr schlechte Belegereife aufweisen. Weiterhin zeigt das Vergleichsbeispiel *Ref. 4* eine derart schlechte Verarbeitbarkeit, so dass eine praktische Verwendung für den Estrichaufbau nicht in Frage kommt. Der Vergleich von Bespiel *Ref. 5* und *B2* zeigt, dass selbst beim Einsatz von Schnellbindern das erfindungsgemässe Beispiel *B2* einen grossen Vorteil in der schnellen Trocknung (bedingt durch reduziertes Anmachwasser) und früherer Belegereife zeigt. Es zeigt sich weiterhin, dass trotz des stark verringerten Gehalts an hydraulischem Bindemittel von *B2* gegenüber *Ref.5* die Belastbarkeit nur geringfügig kleiner ist, die trittschalldämmenden Eigenschaften ausgedrückt über geringere dyn. Steifigkeiten verbessert sind.

Das Beispiel *B1* zeigt im Vergleich zu *Ref. 2* trotz 12,5 % geringerem Bindemittelanteil eine ca. 50 bis 70% höhere Belastbarkeit. Einen weiteren Vorteil von *B1* stellt die Belegereife von 1 Tag statt 13 Tagen bei *Ref. 2* dar. *B1* übersteigt bei der Festigkeit und Belegereife sogar *Ref.* 1, welches ca. 53% mehr Bindemittel enthält.

Die Beispiele *B1* und *B2* zeigen das Potential zur Verbesserung der Festigkeit bei gleich bleibendem Bindemittelgehalt bzw. der Wärmeleitfähigkeit (über geringeren Bindemittelanteil) bei gleich bleibender Festigkeit und verbesserten trittschalldämmenden Eigenschaften und dies gleichzeitig bei stark verkürzter Trocknungszeit.

**Patentansprüche**

1. Dämmstoff-Trockenzusammensetzung zur Herstellung einer Trittschall-und Wärmedämmung, umfassend

   a) ein hydraulisches Bindemittel in einer Menge von weniger als 80 Gewichts-%, bezogen auf die Dämmstoff-Trockenzusammensetzung
   b) mindestens einen Dispersionskunststoff
   c) mindestens Polystyrol in Form von geschäumten Polystyrolperlen
   d) mindestens Polystyrol in Form von geschäumtem Polystyrolgranulat mit einer durch mechanische Belastung beschädigten Oberfläche,

   wobei die Menge des Polystyrols (Summe von c) und d)) mehr als 8 Gewichts-%, bezogen auf die Dämmstoff-Trockenzusammensetzung, beträgt.

2. Dämmstoff-Trockenzusammensetzung gemäss Anspruch 1, **dadurch gekennzeichnet, dass** die Dämmstoff-Trockenzusammensetzung weiterhin mindestens ein Wasserrückhaltemittel enthält.

3. Dämmstoff-Trockenzusammensetzung gemäss Anspruch 1 oder 2, **dadurch gekennzeichnet, dass** die Dämmstoff-Trockenzusammensetzung eine Trockenrohschüttdichte von weniger als 110 kg/m$^3$, insbesondere von weniger als 100 kg/m$^3$, bevorzugt zwischen 20 und 100 kg/ m$^3$, aufweist.

4. Dämmstoff-Trockenzusammensetzung gemäss einem der vorhergehenden Ansprüche, **dadurch gekennzeichnet, dass** die Menge des Polystyrols (Summe von c) und d)) mehr als 10 Gewichts-%, bezogen auf die Dämmstoff-Trockenzusammensetzung, beträgt.

5. Dämmstoff-Trockenzusammensetzung gemäss einem der vorhergehenden Ansprüche, **dadurch gekennzeichnet, dass** der Anteil des hydraulischen Bindemittels 40 - 80 Gewichts-%, insbesondere von 50-80 Gewichts-%, bevorzugt von 50 - 75 Gewichts-%, bezogen auf die Dämmstoff-Trockenzusammensetzung, beträgt.

6. Dämmstoff-Trockenzusammensetzung gemäss einem der vorhergehenden Ansprüche, **dadurch gekennzeichnet, dass** der Anteil des Polystyrols (Summe von c) und d)) zwischen 15 und 45 Gewichts-%, insbesondere zwischen 15 und 40 Gewichts-%, bevorzugt zwischen 15 und 40 Gewichts-%, bezogen auf die Dämmstoff-Trockenzusammensetzung, beträgt.

**7.** Dämmstoff-Trockenzusammensetzung gemäss einem der vorhergehenden Ansprüche, **dadurch gekennzeichnet, dass** das Gewichtsverhältnis von Polystyrol in Form von geschäumten Polystyrolperlen (c) zu Polystyrol in Form von geschäumtem Polystyrolgranulat (d) mit einer durch mechanische Belastung beschädigten Oberfläche einen Wert zwischen 0.1 und 5, insbesondere zwischen 0.2 und 3, bevorzugt zwischen 0.3 und 2 beträgt.

**8.** Dämmstoff-Trockenzusammensetzung gemäss einem der vorhergehenden Ansprüche, **dadurch gekennzeichnet, dass** das Polystyrol in Form von geschäumten Polystyrolperlen (c) Neu-Polystyrol ist.

**9.** Dämmstoff-Trockenzusammensetzung gemäss einem der vorhergehenden Ansprüche, **dadurch gekennzeichnet, dass** das Polystyrol in Form von geschäumtem Polystyrolgranulat (d) mit einer durch mechanische Belastung beschädigten Oberfläche Recyling-Polystyrol ist, und insbesondere durch Mahlen von Polystyrolplatten und/oder Polystyrolverpackungen erhalten wird.

**10.** Dämmstoff-Trockenzusammensetzung gemäss einem der Ansprüche 1 bis 8, **dadurch gekennzeichnet, dass** das Polystyrol in Form von geschäumtem Polystyrolgranulat (d) mit einer durch mechanische Belastung beschädigten Oberfläche erhalten wird durch eine mechanische Bearbeitung, insbesondere durch ein Walken oder Aufrauen, von Polystyrol in Form von geschäumten Polystyrolperlen (c).

**11.** Dämmstoff-Trockenzusammensetzung gemäss einem der vorhergehenden Ansprüche, **dadurch gekennzeichnet, dass** das Polystyrol in Form von geschäumten Polystyrolperlen (c) oder in Form von geschäumtem Polystyrolgranulat (d) eine Schüttdichte zwischen 8 und 20 kg/m$^3$, insbesondere zwischen 10 und 18 kg/m$^3$, bevorzugt zwischen 12 und 18 kg/m$^3$, aufweist.

**12.** Dämmstoff-Trockenzusammensetzung gemäss einem der vorhergehenden Ansprüche, **dadurch gekennzeichnet, dass** das hydraulische Bindemittel Zement, insbesondere Portlandzement, enthält oder daraus besteht.

**13.** Dämmstoff-Trockenzusammensetzung gemäss einem der vorhergehenden Ansprüche, **dadurch gekennzeichnet, dass** der Dispersionskunststoff in einer Menge von 0.5 bis 25 Gewichts-%, insbesondere von 0.5 bis 15 Gewichts-%, bevorzugt von 2 bis 12 Gewichts-%, Trockenmasse bezogen auf das hydraulische Bindemittel beträgt.

**14.** Dämmstoff-Trockenzusammensetzung gemäss einem der vorhergehenden Ansprüche, **dadurch gekennzeichnet, dass** der Dispersionskunststoff ein Copolymer von mindestens zwei ethylenisch ungesättigten Monomeren, insbesondere ausgewählt aus der Gruppe Ethylen, Butadien, Methacrylsäure, Acrylsäure, Methacrylsäureestern, Acrylsäureestern, Styrol, Vinylacetat und Acrylonitril ist.

**15.** Dämmstoff-Trockenzusammensetzung gemäss Anspruch 14, **dadurch gekennzeichnet, dass** der Dispersionskunststoff ein Copolymer Acrylsäure/Styrol oder Methacrylsäure/Styrol oder Vinylacetat/Ethylen, insbesondere ein Copolymer Acrylsäure/Styrol oder Methacrylsäure/Styrol, ist.

**16.** Dämmstoff-Trockenzusammensetzung gemäss Anspruch 14 oder 15, **dadurch gekennzeichnet, dass** der Dispersionskunststoff ein Molekulargewicht zwischen 30'000 und 10'000'000 g/mol, insbesondere zwischen 100'000 und 5'000'000 g/mol, bevorzugt zwischen 200'000 und 2'000'000 g/mol, aufweist.

**17.** Dämmstoff-Trockenzusammensetzung gemäss einem der Ansprüche 2 bis 16, **dadurch gekennzeichnet, dass** der Gewichtsanteil der Summe aller Wasserrückhaltemittel, bezogen auf das hydraulische Bindemittel zwischen 0.1 Gew.-% und 25 Gew.-% beträgt.

**18.** Dämmstoff-Trockenzusammensetzung gemäss einem der Ansprüche 2 bis 17, **dadurch gekennzeichnet, dass** das Wasserrückhaltemittel eine organische Verbindung und dass der Gewichtsanteil der Summe aller organischer Wasserrückhaltemittel zwischen 0.1 und 9 Gew.-%, bevorzugt zwischen 0.5 und 5 Gew.-%, insbesondere zwischen 0.7 und 4 Gew.-%, bezogen auf das hydraulische Bindemittel, liegt.

**19.** Dämmstoff-Trockenzusammensetzung gemäss einem der Ansprüche 2 bis 18, **dadurch gekennzeichnet, dass** das Wasserrückhaltemittel ein Stärkeether, Cellulosederivat, Welan Gum oder ein synthetischer Verdicker, insbesondere eine Hydroxyalkylmethylcellulose, bevorzugt eine Hydroxypropylmethylcellulose oder eine Hydroxyethylmethylcellulose, ist.

20. Dämmstoff-Trockenzusammensetzung gemäss einem der Ansprüche 2 bis 17, **dadurch gekennzeichnet, dass** das Wasserrückhaltemittel eine anorganische Verbindung ist und dass der Gewichtsanteil der Summe aller anorganischen Wasserrückhaltemittel zwischen 0.2 und 25 Gew.-%, insbesondere zwischen 0.5 und 9 Gew.-%, bezogen auf das hydraulische Bindemittel, liegt.

21. Dämmstoff-Trockenzusammensetzung gemäss einem der Ansprüche 2 bis 17 oder 20 **dadurch gekennzeichnet, dass** das Wasserrückhaltemittel ein Mehrschichtsilikat oder ein kalziniertes Kaolin, bevorzugt Metakaolin, ist.

22. Dämmstoffzusammensetzung erhalten aus einer Dämmstoff-Trockenzusammensetzung gemäss einem der Ansprüche 1 bis 21 und Wasser.

23. Dämmstoffzusammensetzung gemäss Anspruch 22, **dadurch gekennzeichnet, dass** das hydraulische Bindemittel Zement, insbesondere Portlandzement, enthält oder daraus besteht und dass die Menge des Wasser so bemessen ist, dass das Wasser/Zement-Verhältnis von 0.2 bis 3, insbesondere 0.3 bis 2.5, bevorzugt 0.3 bis 1.5, ist.

24. Dämmstoffzusammensetzung gemäss Anspruch 22 oder 23, **dadurch gekennzeichnet, dass** die Menge des hydraulische Bindemittels 15-35 kg/m$^3$, insbesondere 15-30 kg/m$^3$, bezogen auf die nichtausgehärtete Dämmzusammensetzung beträgt.

25. Dämmstoffzusammensetzung gemäss Anspruch 22 oder 23 **dadurch gekennzeichnet, dass** die Menge des hydraulischen Bindemittels 35 - 50 kg/m$^3$, insbesondere 40 - 50 kg/m$^3$, bezogen auf die nichtausgehärtete Dämmzusammensetzung beträgt.

26. Dämmstoff erhalten aus der einer Dämmstoff-Trockenzusammensetzung gemäss einem der Ansprüche 1 bis 21 nach Vermischung mit Wasser oder einer Dämmstoffzusammensetzung gemäss einem der Ansprüche 22 bis 25 nach Reaktion des hydraulischen Bindemittels mit Wasser.

27. Verwendung einer Dämmstoff-Trockenzusammensetzung gemäss einem der Ansprüche 1 bis 21 nach Vermischung mit Wasser oder einer Dämmstoffzusammensetzung gemäss einem der Ansprüche 22 bis 25 **dadurch gekennzeichnet, dass** sie auf einem Boden appliziert und ausgehärtet wird.

28. Verwendung einer Dämmstoff-Trockenzusammensetzung gemäss einem der Ansprüche 1 bis 21 oder einer Dämmstoffzusammensetzung gemäss einem der Ansprüche 22 bis 25 in einem Bodenaufbau zu wärmedämmenden und/oder trittschalldämmenden Zwecken.

29. Bodenaufbau aufweisend einen Dämmstoff gemäss Anspruch 26.

Figur 1

Figur 2

Figur 3

Figur 4

**Europäisches Patentamt**

# EUROPÄISCHER RECHERCHENBERICHT

Nummer der Anmeldung

EP 07 11 1642

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 28 36 855 A1 (MONTENOVO WERKE HANS HEITMANN; KOCH KALK & BAU GMBH) 13. März 1980 (1980-03-13) * Ansprüche 1,6 * * Seite 10, Zeilen 4-11 * | 1-26 | INV. C04B16/08 C04B28/02 |
| A,D | DE 29 30 615 A1 (RHODIUS GEB) 19. Februar 1981 (1981-02-19) * das ganze Dokument * | 1-29 | |
| A,D | WO 2005/021459 A (SIKA TECHNOLOGY AG [CH]; SIKA OESTERREICH GMBH [AT]; JERNEI MICHAEL [A] 10. März 2005 (2005-03-10) * das ganze Dokument * | 1-29 | |
| A,D | WO 2005/021460 A (SIKA TECHNOLOGY AG [CH]; SIKA OESTERREICH GMBH [AT]; JERNEI MICHAEL [A] 10. März 2005 (2005-03-10) * das ganze Dokument * | 1-29 | |
| A,D | EP 0 819 662 A (WIMBERGER FRANZ [AT]) 21. Januar 1998 (1998-01-21) * das ganze Dokument * | 1-29 | RECHERCHIERTE SACHGEBIETE (IPC) C04B |
| A,D | DE 200 17 460 U1 (WIEGAND THOMAS [DE]) 18. Januar 2001 (2001-01-18) * Beispiel 6 * | 1-29 | |
| A | EP 1 634 911 A (BASF AG [DE]) 15. März 2006 (2006-03-15) * das ganze Dokument * | 1-29 | |

Der vorliegende Recherchenbericht wurde für alle Patentansprüche erstellt

| Recherchenort | Abschlußdatum der Recherche | Prüfer |
|---|---|---|
| München | 13. Februar 2008 | Gattinger, Irene |

**ANHANG ZUM EUROPÄISCHEN RECHERCHENBERICHT**
**ÜBER DIE EUROPÄISCHE PATENTANMELDUNG NR.**

EP 07 11 1642

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-02-2008

| Im Recherchenbericht angeführtes Patentdokument | | Datum der Veröffentlichung | Mitglied(er) der Patentfamilie | | Datum der Veröffentlichung |
|---|---|---|---|---|---|
| DE 2836855 | A1 | 13-03-1980 | KEINE | | |
| DE 2930615 | A1 | 19-02-1981 | KEINE | | |
| WO 2005021459 | A | 10-03-2005 | EP | 1510507 A1 | 02-03-2005 |
| WO 2005021460 | A | 10-03-2005 | EP | 1510508 A1 | 02-03-2005 |
| EP 0819662 | A | 21-01-1998 | AT | 404588 B | 28-12-1998 |
| | | | AT | 129996 A | 15-05-1998 |
| DE 20017460 | U1 | 18-01-2001 | KEINE | | |
| EP 1634911 | A | 15-03-2006 | DE 102004043837 A1 | | 30-03-2006 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3345550 A1
- EP 0819662 A1
- DE 2836855 A1
- DE 20017460 U1
- DE 2930615 A1
- WO 2005021459 A2
- WO 2005021460 A2

**In der Beschreibung aufgeführte Nicht-Patentliteratur**

- hydraulisches Bindemittel. CD Römpp Chemie Lexikon- Version 1.0. Georg Thieme Verlag, 1995
- latent hydraulisches Bindemittel. CD Römpp Chemie Lexikon - Version 1.0. Georg Thieme Verlag, 1995
- nichthydraulisches Bindemittel. CD Römpp Chemie Lexikon- Version 1.0. Georg Thieme Verlag, 1995